# EUROPEAN PATENT APPLICATION

(11) **EP 4 848 544 A1**
(43) Date of publication of application: **02.12.2026**
(21) Application number: 25925883.8
(22) Date of filing: 29.09.2025
(51) Int. Cl.: H02K 9/19, H02K 1/20, F16H 57/04, F16N 7/38, B60K 17/04

(54) **ELECTRIC DRIVE ASSEMBLY AND VEHICLE**

(30) Priority: 28.02.2025 CN 202510236815
(71) Applicant: Chery Automobile Co., Ltd., Wuhu, Anhui 241006 (CN)
(72) Inventor: CHEN, Chong, Wuhu, Anhui 241006 (CN); CAO, Chao, Wuhu, Anhui 241006 (CN); QIU, Qinglan, Wuhu, Anhui 241006 (CN); ZHANG, Xing, Wuhu, Anhui 241006 (CN); ZHU, Bocheng, Wuhu, Anhui 241006 (CN); XING, Haojin, Wuhu, Anhui 241006 (CN)
(74) Representative: Adamson Jones
(86) International application number: PCT/CN2025/125072
(87) International publication number: WO 2026/179162

(57) **Abstract**

The present disclosure relates to an electric drive assembly and a vehicle, and belongs to the technical field of electric drive assemblies. The electric drive assembly includes a motor assembly, a reducer shaft-gear assembly and a cooling and lubricating oil circuit. The motor assembly is drivingly connected to the reducer shaft-gear assembly, and each of the motor assembly and the reducer shaft-gear assembly is provided with a matching bearing set. The cooling and lubricating oil circuit includes an oil pumping assembly, a main oil passage, a branch oil passage, an oil spray pipe and multiple bearing lubricating oil passages. The oil pumping assembly is configured to pump oil to the main oil passage; both the branch oil passage and the oil spray pipe are in fluid communication with the main oil passage; the bearing lubricating oil passages correspond one-to-one to bearings in the bearing set. Wherein the branch oil passage is configured to deliver oil to the motor assembly; the oil spray pipe is provided with multiple first oil spray nozzles, and the multiple first oil spray nozzles correspond to the multiple bearings in the bearing set, so that oil is sprayed from the first oil spray nozzles onto the corresponding bearings to form the corresponding bearing lubricating oil passages. The present disclosure can simplify the cooling and lubricating oil circuit in the electric drive assembly.

## Description

The present disclosure claims priority to Chinese Patent Application No. 202510236815.8, filed February 28, 2025, and entitled "ELECTRIC DRIVE ASSEMBLY AND VEHICLE", the entire contents of which are incorporated herein by reference.

### TECHNICAL FIELD

The present disclosure relates to the technical field of electric drive assemblies, and particularly relates to an electric drive assembly and a vehicle.

### BACKGROUND

An electric drive assembly integrates a drive motor and a reducer of an electric vehicle, and serves as the power source for driving the entire vehicle. The heat dissipation performance of the drive motor has a direct impact on the power performance of the vehicle.

A stator and a rotor are main heat sources during operation of the drive motor. At present, common cooling methods for the drive motor include water cooling and oil cooling. Among them, the oil cooling method has reliable electrical insulation performance, can directly contact the stator and the rotor to cool them, and thus has higher cooling efficiency. In addition, the oil cooling method can also lubricate components in the electric drive assembly.

However, to achieve cooling of the stator and the rotor and lubrication of components in the electric drive assembly, most cooling and lubricating systems in oil-cooled electric drive assemblies are relatively complex, which restricts the improvement of the power density of the electric drive assembly and increases the overall flow resistance of the cooling and lubricating oil circuit.

### SUMMARY

In view of this, the embodiments of the present disclosure provide an electric drive assembly and a vehicle that can simplify the cooling and lubricating oil circuit in the electric drive assembly. The technical solution is as follows.

In the first aspect, an electric drive assembly is provided, which includes a motor assembly, a reducer shaft-gear assembly, and a cooling and lubricating oil circuit;
the motor assembly is drivingly connected to the reducer shaft-gear assembly, and each of the motor assembly and the reducer shaft-gear assembly is provided with a matching bearing set; and
the cooling and lubricating oil circuit includes an oil pumping assembly, a main oil passage, a branch oil passage, an oil spray pipe, and multiple bearing lubricating oil passages; wherein the oil pumping assembly is configured to pump oil to the main oil passage, both the branch oil passage and the oil spray pipe are in fluid communication with the main oil passage, and the multiple bearing lubricating oil passages correspond one-to-one to bearings in the matching bearing set;
wherein the branch oil passage is configured to deliver oil to the motor assembly, the oil spray pipe is provided with multiple first oil spray nozzles in correspondence with the bearings in the matching bearing set, such that oil is sprayed from the first oil spray nozzles onto corresponding bearings to form corresponding bearing lubricating oil passages.

In one possible implementation, the electric drive assembly further includes an oil cooler, wherein the oil cooler has an oil inlet and an oil outlet, the oil inlet is in fluid communication with the main oil passage, and the oil outlet is in fluid communication with the branch oil passage, such that oil in the main oil passage passes through the oil cooler and is cooled before entering the branch oil passage.

In one possible implementation, the motor assembly includes a rotating shaft, a rotor, a stator, and a stator winding, wherein the rotating shaft is drivingly connected to an input shaft of the reducer shaft-gear assembly, the rotor is fitted over an outer circumference of the rotating shaft, the stator is arranged around an axis of the rotor on an outer side of the rotor, and the stator winding is wound on an inner side of the stator; and
the branch oil passage includes a first oil sub-passage and a second oil sub-passage, wherein the first oil sub-passage is in fluid communication with the main oil passage and is configured to deliver oil to the rotating shaft, the rotor, and the stator winding, and the second oil sub-passage is in fluid communication with the main oil passage and is configured to deliver oil to the stator.

In one possible implementation, the electric drive assembly further includes an oil cooler, wherein the oil cooler has an oil inlet and an oil outlet, and the oil outlet includes a first oil outlet and a second oil outlet; wherein
the first oil outlet is in fluid communication with the first oil sub-passage, such that oil cooled by the oil cooler flows from the first oil outlet into the first oil sub-passage; and
the second oil outlet is in fluid communication with the second oil sub-passage, such that oil cooled by the oil cooler flows from the second oil outlet into the second oil sub-passage.

In one possible implementation, the oil spray pipe is in fluid communication with a portion of the main oil passage located between the oil pumping assembly and the oil cooler.

In one possible implementation, the rotating shaft has a hollow oil cavity extending along an axial direction of the rotating shaft;
the rotor has multiple rotor oil passages extending along an axial direction of the rotor, the multiple rotor oil passages being distributed at intervals around the axis of the rotor; and
the multiple rotor oil passages are in fluid communication with the hollow oil cavity, and the first oil sub-passage is in fluid communication with the hollow oil cavity.

In one possible implementation, the electric drive assembly further includes two rotor end plates, wherein the two rotor end plates are fitted over the outer circumference of the rotating shaft and disposed at two axial ends of the rotor respectively;
each of the two rotor end plates is provided with multiple end plate oil inlet holes and multiple end plate oil outlet holes, wherein the multiple end plate oil outlet holes axially penetrate through a corresponding rotor end plate, and the multiple end plate oil inlet holes and the multiple end plate oil outlet holes are each distributed at intervals around the axis of the rotor; and
each of the multiple end plate oil inlet holes is in fluid communication with the hollow oil cavity; and each of the multiple rotor oil passages has one end communicating with an end plate oil inlet hole of one of the two rotor end plates, and another end communicating with an end plate oil outlet hole of another of the two rotor end plates.

In one possible implementation, the cooling and lubricating oil circuit further includes two annular oil passages disposed at two axial ends of the stator respectively, and one of the two annular oil passages is in fluid communication with the second oil sub-passage; and
the stator has multiple stator oil passages extending along an axial direction of the stator, the stator oil passages are distributed at intervals around an axis of the stator, and two ends of the stator are in fluid communication with the two annular oil passages respectively.

In one possible implementation, each of the two annular oil passages is provided with multiple second oil spray nozzles distributed at intervals along a corresponding annular oil passage, and the multiple second oil spray nozzles face the stator winding, such that oil is sprayed from the second oil spray nozzles onto the stator winding.

In the second aspect, a vehicle is provided. The vehicle includes the electric drive assembly according to any of the first aspect.

In the solution shown in the present disclosure, oil pumped by the oil pumping assembly to the main oil passage can enter the branch oil passage and the oil spray pipe. Therefore, oil can be delivered to the motor assembly through the branch oil passage to cool the motor assembly, and oil can be sprayed onto multiple bearings through the first oil spray nozzles of the oil spray pipe to form corresponding bearing lubricating oil passages, so as to lubricate the corresponding bearings.

In this way, not only cooling of the motor assembly is achieved, but also lubrication of multiple bearings is realized by providing one oil spray pipe, which greatly simplifies the cooling and lubricating oil circuit in the electric drive assembly, facilitates the improvement of the power density of the electric drive assembly, and also helps reduce the overall flow resistance of the cooling and lubricating oil circuit.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
Fig. 1 is a schematic structural diagram of a cooling and lubricating oil circuit of an electric drive assembly according to some embodiments of the present disclosure;
Fig. 2 is a schematic structural diagram of a cooling and lubricating oil circuit of an electric drive assembly from another angle according to some embodiments of the present disclosure;
Fig. 3 is a schematic structural diagram of an oil spray pipe according to some embodiments of the present disclosure;
Fig. 4 is a schematic cross-sectional view of a partial structure of an electric drive assembly according to some embodiments of the present disclosure;
Fig. 5 is a schematic structural diagram of a rotor end plate according to some embodiments of the present disclosure; and
Fig. 6 is a schematic structural diagram of a stator end sealing oil ring according to some embodiments of the present disclosure.

Reference Numerals:
1. Oil pumping assembly; 11. Electric oil pump; 12. Pressure filtration cavity; 2. Main oil passage; 21. First oil sub-passage; 22. Second oil sub-passage; 221. Rotating shaft rear bearing oil inlet passage; 222. Rotating shaft rear bearing lubricating oil passage; 3. Oil spray pipe; 31. First oil spray nozzle; 311. Output shaft rear bearing lubricating oil passage; 312. Differential front bearing lubricating oil passage; 313. Differential rear bearing lubricating oil passage; 32. Mounting hole; 33. Oil inlet end; 41. Rotating shaft; 411. Hollow oil cavity; 412. Rotating shaft oil slinging hole; 42. Rotor; 421. Rotor oil passage; 43. Stator; 431. Stator oil passage; 44. Stator winding; 5. Oil cooler; 51. Oil inlet; 52. First oil outlet; 53. Second oil outlet; 54. Water inlet; 55. Water outlet; 6. Rotor end plate; 61. End plate oil inlet hole; 611. End plate oil inlet groove; 62. End plate oil outlet hole; 63. End plate mounting hole; 7. Annular oil passage; 70. Stator end sealing oil ring; 71. Second oil spray nozzle; 8. Housing; 81. Input shaft front bearing lubricating oil passage; 82. Output shaft front bearing lubricating oil passage; 83. Intermediate bearing oil passage; 84. Input shaft rear bearing lubricating oil passage; 9. Input shaft; 91. Input shaft oil pipe; 911. Input shaft oil passage; 92. Rotor oil inlet pipe; 921. Rotor oil inlet passage.

### DETAILED DESCRIPTION

For clearer descriptions of the objectives, technical solutions, and advantages of the present disclosure, embodiments of the present disclosure are further described in detail hereinafter with reference to the accompanying drawings.

The present embodiments relate to an electric drive assembly, which is formed by integrating a drive motor and a reducer of an electric vehicle. Accordingly, the electric drive assembly includes a motor assembly, a reducer shaft-gear assembly, and a housing for mounting the motor assembly and the reducer shaft-gear assembly. Both the motor assembly and the reducer shaft-gear assembly are mounted inside the housing through bearings of corresponding bearing sets. For example, the housing includes a reducer housing, a main housing 8, and a motor rear cover connected in sequence. The reducer housing, the main housing 8, and the motor rear cover are fixed by bolted connection, so that the motor assembly and the reducer shaft-gear assembly are stably mounted in a cavity enclosed by the reducer housing, the main housing 8, and the motor rear cover.

The reducer shaft-gear assembly includes an input shaft 9, an output shaft, and a differential. An input shaft gear is fixedly mounted on the input shaft 9, and is drivingly connected to the motor assembly through the input shaft gear. An output shaft gear is fixedly mounted on the output shaft, and is in meshing transmission connection with the input shaft 9 through the output shaft gear and the input shaft gear. The differential has differential side gears, and is in meshing transmission connection with the output shaft through the differential side gears of the differential and the input shaft gear.

The bearing set includes an input shaft front bearing, an input shaft rear bearing, an output shaft front bearing, an output shaft rear bearing, a differential front bearing, and a differential rear bearing. Two ends of the input shaft 9 are mounted in the housing through the input shaft front bearing and the input shaft rear bearing respectively. Two ends of the output shaft are mounted in the housing through the output shaft front bearing and the output shaft rear bearing respectively. Two ends of the differential are mounted in the housing through the differential front bearing and the differential rear bearing respectively.

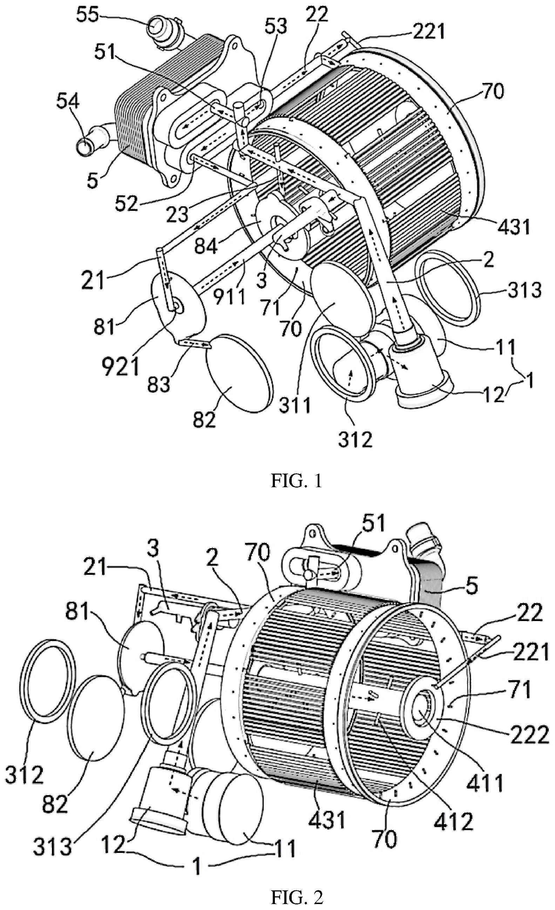

To achieve cooling and lubrication of the motor assembly and the reducer shaft-gear assembly, the electric drive assembly correspondingly further includes a cooling and lubricating oil circuit. Referring to Fig. 1, which is a schematic structural diagram of the cooling and lubricating oil circuit of the electric drive assembly, and Fig. 2, which is a schematic structural diagram of the cooling and lubricating oil circuit of the electric drive assembly from another angle. The cooling and lubricating oil circuit includes an oil pumping assembly 1, a main oil passage 2, a branch oil passage, an oil spray pipe 3, and multiple bearing lubricating oil passages. Both the main oil passage 2 and the branch oil passage are formed by surrounding pipes, or are in the form of holes, grooves, etc. provided on the housing or components, as long as they can form a definite oil flow path. In the present embodiment, both the main oil passage 2 and the branch oil passage are integrated on the reducer housing, the main housing 8, and the motor rear cover, so that complex pipeline components are avoided, which is conducive to improving the power density of the electric drive assembly.

With continued reference to Fig. 1 and Fig. 2, the oil pumping assembly 1 is configured to pump engine oil to the main oil passage 2. The oil pumping assembly 1 includes the electric oil pump 11 and the pressure filtration cavity 12 as shown in Fig. 1. The electric oil pump 11 pumps oil at the bottom of the housing into the pressure filtration cavity 12, filters impurities in the oil through the pressure filtration cavity 12, and then delivers the oil to the main oil passage 2. Both the branch oil passage and the oil spray pipe 3 are in fluid communication with the main oil passage 2. The bearing lubricating oil passages correspond one-to-one to bearings in the bearing set, and are configured to lubricate the corresponding bearings.

The branch oil passage is configured to deliver oil to the motor assembly. The oil spray pipe 3 is provided with multiple first oil spray nozzles 31. The multiple first oil spray nozzles 31 correspond to the multiple bearings in the bearing set, so that oil is sprayed from the first oil spray nozzles 31 onto the corresponding bearings to form the corresponding bearing lubricating oil passages.

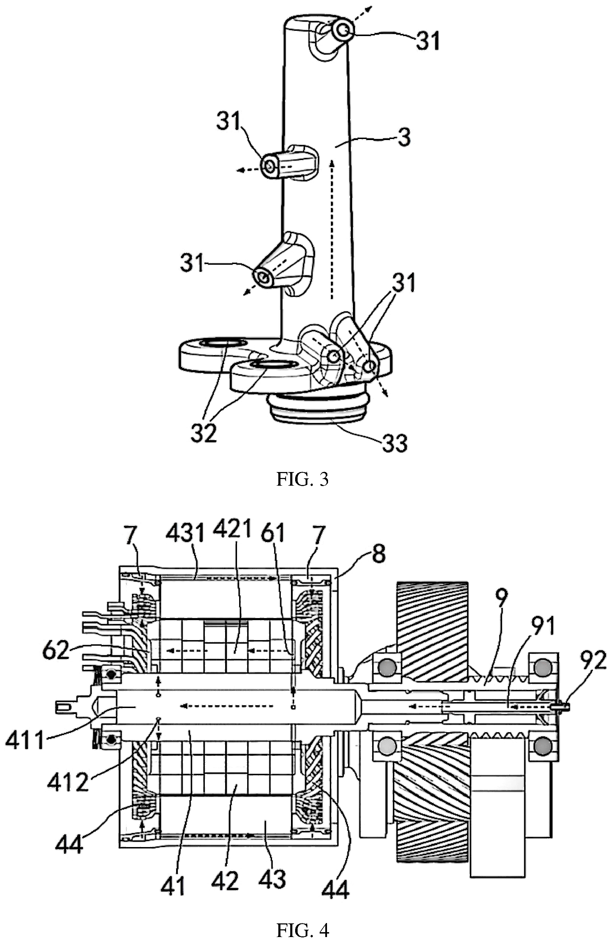

Fig. 3 is a schematic structural diagram of the oil spray pipe 3. The oil spray pipe 3 has an oil inlet end 33, and the oil spray pipe 3 is in fluid communication with the main oil passage 2 through the oil inlet end 33. In Fig. 3, the number of the first oil spray nozzles 31 of the oil spray pipe 3 may be five, but the number of the first oil spray nozzles 31 of the oil spray pipe 3 may also be four, three, two, etc.

In the present embodiments, five first oil spray nozzles 31 of the oil spray pipe 3 shown in Fig. 3 are taken as an example. Three of the first oil spray nozzles 31 respectively correspond to the output shaft rear bearing, the differential front bearing, and the differential rear bearing one-to-one. These three first oil spray nozzles 31 spray oil entering the oil spray pipe 3 onto the output shaft rear bearing, the differential front bearing, and the differential rear bearing respectively, thereby forming an output shaft rear bearing lubricating oil passage 311, a differential front bearing lubricating oil passage 312, and a differential rear bearing lubricating oil passage 313. Meanwhile, the other two first oil spray nozzles 31 respectively spray toward the meshing position between the input shaft gear and the output shaft gear and toward the differential side gears, so as to lubricate the input shaft gear, the output shaft gear, and the differential side gears.

Specifically, the number and orientation of the first oil spray nozzles 31 can be adjusted according to the mounting positions of bearings in the electric drive assembly and gears of the reducer shaft-gear assembly, as long as oil can be sprayed to components in the electric drive assembly that need lubrication.

It can be seen from the above that oil pumped by the oil pumping assembly 1 to the main oil passage 2 enters the branch oil passage and the oil spray pipe 3. Therefore, oil is delivered to the motor assembly through the branch oil passage to cool the motor assembly, and oil is sprayed onto multiple bearings through the first oil spray nozzles 31 of the oil spray pipe 3 to form corresponding bearing lubricating oil passages, so as to lubricate the corresponding bearings. Meanwhile, oil is also sprayed onto gears of the reducer shaft-gear assembly through the first oil spray nozzles 31 to lubricate the corresponding gears.

In this way, not only cooling of the motor assembly is achieved, but also lubrication of multiple bearings and gears is realized by providing one oil spray pipe 3, which greatly simplifies the cooling and lubricating oil circuit in the electric drive assembly, facilitates the improvement of the power density of the electric drive assembly, and also helps reduce the overall flow resistance of the cooling and lubricating oil circuit.

In an example, since oil circulates inside the housing of the electric drive assembly and cools the motor assembly through the branch oil passage, the oil may have a relatively high temperature after cooling the motor assembly and falling back to the bottom of the housing, which may result in a relatively high temperature of the oil re-pumped by the oil pumping assembly 1 to the main oil passage 2.

Correspondingly, with continued reference to Fig. 1 and Fig. 2, the electric drive assembly further includes an oil cooler 5. The oil cooler 5 has an oil inlet 51 and an oil outlet. The oil inlet 51 is in fluid communication with the main oil passage 2, and the oil outlet is in fluid communication with the branch oil passage, so that oil in the main oil passage 2 can pass through the oil cooler 5 and be cooled before entering the branch oil passage.

For example, the oil cooler 5 is fixedly mounted on the side of the main housing 8 by means of bolts, screws, etc. The oil cooler 5 further has a water inlet 54 and a water outlet 55, so that water can enter the oil cooler 5 from the water inlet 54 and leave the oil cooler 5 from the water outlet 55. The oil cooler 5 is internally provided with an oil-water spaced heat dissipation layer, so that oil and water entering the oil cooler 5 exchange heat, thereby achieving the purpose of cooling the oil.

Thus, the oil cooler 5 cools the oil before it re-enters the branch oil passage, which is conducive to improving the cooling efficiency of the motor assembly.

In an example, Fig. 4 is a schematic cross-sectional view of a partial structure of the electric drive assembly. The motor assembly includes a rotating shaft 41, a rotor 42, a stator 43, and a stator winding 44. The rotating shaft 41 is drivingly connected to the input shaft 9 of the reducer shaft-gear assembly. For example, one end of the rotating shaft 41 has an external spline structure, and one end of the input shaft 9 has an internal spline structure. The one end of the rotating shaft 41 and the input shaft 9 are connected through the cooperation of the external spline structure and the internal spline structure, and the other end is mounted on the motor rear cover through a rotating shaft rear bearing.

With continued reference to Fig. 4, the rotor 42 is fitted over the outer circumference of the rotating shaft 41. The stator 43 is arranged around the axis of the rotor 42 on the outer side thereof. The stator winding 44 is wound on the inner side of the stator 43, and the stator winding 44 protrudes from both axial ends of the stator 43.

For example, the stator 43 is fixedly mounted inside the main housing 8. For example, there is an interference fit between the stator 43 and the main housing 8. During assembly, the main housing 8 is heated first, then the stator 43 is pressed into the main housing 8, and the fixation between the stator 43 and the main housing 8 is realized after the main housing 8 cools down.

With continued reference to Fig. 1 and Fig. 2, the branch oil passage includes a first oil sub-passage 21 and a second oil sub-passage 22. The first oil sub-passage 21 is in fluid communication with the main oil passage 2 and configured to deliver oil to the rotating shaft 41, the rotor 42, and the stator winding 44. The second oil sub-passage 22 is in fluid communication with the main oil passage 2 and configured to deliver oil to the stator 43. Thus, the first oil sub-passage 21 and the second oil sub-passage 22 respectively deliver oil to and cool the rotating shaft 41, the rotor 42, the stator 43, and the stator winding 44, thereby achieving high cooling efficiency.

In an example, with continued reference to Fig. 1 and Fig. 2, the electric drive assembly further includes an oil cooler 5. The oil cooler 5 has an oil inlet 51 and an oil outlet, and the oil outlet includes a first oil outlet 52 and a second oil outlet 53. The first oil outlet 52 is in fluid communication with the first oil sub-passage 21, so that oil cooled by the oil cooler 5 flows from the first oil outlet 52 into the first oil sub-passage 21. The second oil outlet 53 is in fluid communication with the second oil sub-passage 22, so that oil cooled by the oil cooler 5 flows from the second oil outlet 53 into the second oil sub-passage 22.

Thus, since the oil cooler 5 has the first oil outlet 52 and the second oil outlet 53, oil entering the oil cooler 5 is respectively introduced into the first oil sub-passage 21 and the second oil sub-passage 22. Therefore, the oil is divided into two streams in the oil cooler 5, which respectively enter the first oil sub-passage 21 and the second oil sub-passage 22, so that the oil has a larger cooling area in the oil cooler 5, which is conducive to improving the oil cooling efficiency.

In an example, with continued reference to Fig. 1, the oil spray pipe 3 is in fluid communication with a portion of the main oil passage 2 located between the oil pumping assembly 1 and the oil cooler 5.

Thus, since the oil spray pipe 3 is connected between the oil cooler 5 and the oil pumping assembly 1, the oil entering the oil spray pipe 3 still has a relatively high temperature, so that the oil sprayed from the first oil spray nozzles 31 still has a relatively high pressure, thereby preventing insufficient oil from entering the corresponding bearing lubricating oil passages to lubricate the corresponding bearings.

In an example, referring to Fig. 4, the rotating shaft 41 has a hollow oil cavity 411 extending along the axial direction of the rotating shaft. The rotor 42 has multiple rotor oil passages 421 extending along the axial direction of the rotor, and the multiple rotor oil passages 421 are distributed at intervals around the axis of the rotor 42.

All the multiple rotor oil passages 421 are in fluid communication with the hollow oil cavity 411. For example, oil sub-passages respectively communicating with the rotor oil passages 421 and the hollow oil cavity 411 are formed in the rotor 42 to realize communication between the hollow oil cavity 231 and the rotor oil passages 221. Alternatively, oil sub-passages are provided in other components of the motor assembly to enable communication between the hollow oil cavity 231 and the rotor oil passages 221.

The first oil sub-passage 21 is in fluid communication with the hollow oil cavity 411. For example, as shown in Fig. 4, the input shaft 9 has a hollow structure. The electric drive assembly further includes an input shaft oil pipe 91 and a rotor oil inlet pipe 92. The input shaft oil pipe 91 is located inside the cavity structure of the input shaft 9 and in interference fit with the input shaft 9. The rotor oil inlet pipe 92 is in interference fit with the reducer housing, and is in fluid communication with the first oil sub-passage 21 extending to the reducer housing through a rotor oil inlet passage 921. A first end of the input shaft oil pipe 91 is in clearance fit with the rotor oil inlet pipe 92 and in fluid communication with the rotor oil inlet passage 921 through an input shaft oil passage 911, and a second end of the input shaft oil pipe 91 is in fluid communication with the hollow oil cavity 411 through the input shaft oil passage 911.

It can be seen from the above that oil flows from the first oil sub-passage 21 through the rotor oil inlet passage 921 and the input shaft oil pipe 91 successively into the hollow oil cavity 411 and the rotor oil passages 421, so as to cool the rotating shaft 41 and the rotor 42. Thus, by providing the hollow oil cavity 411 in the rotating shaft 41 and the rotor oil passages 421 in the rotor 42, on the one hand, the space occupied by additional oil pipelines is saved, which is conducive to improving the space utilization rate of the internal space of the electric drive assembly and making the structure of the electric drive assembly more compact; on the other hand, higher cooling efficiency for the rotating shaft 41 and the rotor 42 can be achieved.

In an example, the multiple rotor oil passages 421 are evenly distributed at intervals around the axis of the rotor 42, which improves the uniformity of cooling of the rotor 42.

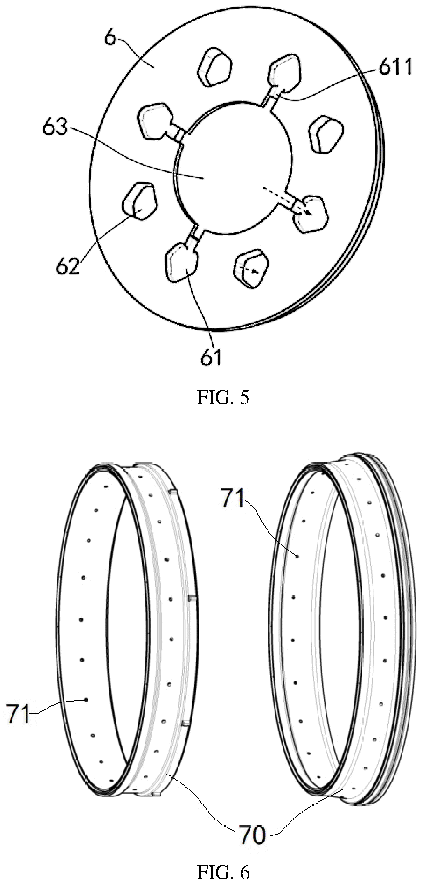

In an example, Fig. 5 is a schematic structural diagram of a rotor end plate 6. With reference to Fig. 4, the electric drive assembly further includes two rotor end plates 6. The two rotor end plates 6 are sleeved on the outer circumference of the rotating shaft 41 and respectively located at two axial ends of the rotor 42. For example, the middle of each rotor end plate 6 has an end plate mounting hole 63, and the rotor end plate 6 is fixedly sleeved on the outer circumference of the rotating shaft 41 through the end plate mounting hole 63.

Each rotor end plate 6 has multiple end plate oil inlet holes 61 and multiple end plate oil outlet holes 62. All the multiple end plate oil outlet holes 62 axially penetrate through the corresponding rotor end plate 6, and the multiple end plate oil inlet holes 61 and the multiple end plate oil outlet holes 62 are distributed at intervals around the axis of the rotor 42. Each end plate oil inlet hole 61 is in fluid communication with the hollow oil cavity 411.

For example, each of the two rotor end plates 6 has multiple end plate oil inlet grooves 611. The rotating shaft 41 has multiple rotating shaft oil slinging holes 412. The rotating shaft oil slinging holes 412 correspond one-to-one to the end plate oil inlet grooves 611 and the end plate oil inlet holes 61 of the two rotor end plates 6. Two ends of each end plate oil inlet groove 611 may respectively communicate with the corresponding end plate mounting hole 63 and the end plate oil inlet hole 61, so that when the rotor end plate 6 is assembled on the rotating shaft 41, two ends of each rotating shaft oil slinging hole 412 may respectively communicate with the corresponding end plate oil inlet groove 611 and the hollow oil cavity 411.

Moreover, each rotor oil passage 421 has one end communicating with the end plate oil inlet hole 61 of one rotor end plate 6, and the other end communicating with the end plate oil outlet hole 62 of the other rotor end plate 6.

It can be seen from the above that oil in the hollow oil cavity 411 can enter one end of the rotor oil passage 421 through the rotating shaft oil slinging hole 412, the end plate oil inlet groove 611, and the end plate oil inlet hole 61 successively, flow to the other end of the rotor oil passage 421, and flow out from the end plate oil outlet hole 62 of the other rotor end plate 6.

Thus, on the one hand, the uniformity of cooling of the rotor 42 is improved; on the other hand, oil flowing out from the end plate oil outlet holes 62 can also be slung onto the inner side of the stator winding 44 to cool the stator winding 44, and then fall into the bottom of the housing to be pumped again by the electric oil pump 11.

In an example, with continued reference to Fig. 4 in combination with Fig. 1 and Fig. 2, the cooling and lubricating oil circuit further includes two annular oil passages 7. The two annular oil passages 7 are respectively located at two axial ends of the stator 43, and one of the two annular oil passages 7 is in fluid communication with the second oil sub-passage 22.

For example, the motor assembly further includes two stator end sealing oil rings 70. Fig. 6 is a schematic structural diagram of the stator end sealing oil ring 70. The two stator end sealing oil rings 70 are respectively located at two axial ends of the stator 41. The two stator end sealing oil rings 70 respectively enclose with the inner wall of the main housing 8 and the end face of the stator 43 to form two annular oil passages 7. Moreover, one end of the second oil sub-passage 22 extends into the main housing 8 to be in fluid communication with one annular oil passage 7.

The stator 43 has multiple stator oil passages 431 extending along its own axial direction. The stator oil passages 431 are distributed at intervals around the axis of the stator 43, and two ends of the stator 43 are respectively in fluid communication with the two annular oil passages 7.

It can be seen from the above that oil flows from the second oil sub-passage 22 through the first annular oil passage 7, the stator oil passages 431, and the second annular oil passage 7 successively to cool the stator 41. Thus, by providing the stator oil passages 431 in the stator 43 and the annular oil passages 7 at both axial ends of the stator 43, on the one hand, the space occupied by additional oil pipelines is saved, which is conducive to improving the space utilization rate of the internal space of the electric drive assembly and making the structure of the electric drive assembly more compact; on the other hand, higher cooling efficiency for the stator 43 can be achieved.

In an example, each of the two annular oil passages 7 is provided with multiple second oil spray nozzles 71. The multiple second oil spray nozzles 71 are distributed at intervals along the corresponding annular oil passage 7, and all the multiple second oil spray nozzles 71 face the stator winding 44, so that oil can be sprayed from the second oil spray nozzles 71 onto the stator winding 44.

For example, as shown in Fig. 4, the two stator end sealing oil rings 70 may respectively surround the periphery of the portions of the stator windings 44 protruding from both axial ends of the stator 41. The multiple second oil spray nozzles 71 are distributed at intervals along the stator end sealing oil ring 70 as shown in Fig. 6, so that the second oil spray nozzles 71 all face the stator winding 44 located inside the stator end sealing oil ring 70.

Thus, oil in the annular oil passage 7 is sprayed onto the outer side of the stator winding 44 through the second oil spray nozzles 71 to cool the stator winding 44.

Meanwhile, since both the inner side and the outer side of the stator winding 44 can be cooled by oil, the heat dissipation efficiency of the stator winding 44 is improved, and the heat dissipation is more uniform.

In an example, the diameter of the second oil spray nozzles 71 of the second annular oil passage 7 is larger than the diameter of the second oil spray nozzles 71 of the first annular oil passage 7. Therefore, the oil flow rate of the second oil spray nozzles 71 of the second annular oil passage 7 is larger than the oil flow rate of the second oil spray nozzles 71 of the first annular oil passage 7. Thus, the cooling effect of oil sprayed from the second oil spray nozzles 71 of the two annular oil passages 7 on the stator windings 44 is consistent, thereby improving the uniformity of cooling of the stator windings 44.

In an example, the distance between a first position and a third position is smaller than the distance between a second position and the third position. The first position is a position where oil sprayed from the second oil spray nozzles 71 of the second annular oil passage 7 onto the stator winding 44 falls in the main housing 8. The second position is a position where oil sprayed from the second oil spray nozzles 71 of the first annular oil passage 7 onto the stator winding 44 falls in the main housing 8. The third position is a position where the oil pumping assembly 1 draws oil from the housing.

In this way, since the oil flow rate falling at the first position is larger than the oil flow rate falling at the second position, and the distance between the first position and the third position is smaller than the distance between the second position and the third position, more oil has a shorter oil return path. Thus, the oil return speed can be increased, making the oil circuit circulation faster, which is conducive to reducing the oil filling amount and lowering the cost.

In an example, the main oil passage 2 is located on the main housing 8. Both the oil spray pipe 3 and the main housing 8 are provided with corresponding mounting holes 32. A rod-shaped fixing member such as a bolt or a screw can pass through the mounting hole 32 of the oil spray pipe 3 and be screwed into the mounting hole 32 of the main housing 8, so as to mount the oil spray pipe 3 on the main housing 8, thereby enabling the oil inlet end 33 of the oil spray pipe 3 to be in fluid communication with the main oil passage 2.

In an example, the cooling and lubricating oil circuit further includes a rotating shaft rear bearing oil inlet passage 221. One end of the rotating shaft rear bearing oil inlet passage 221 is in fluid communication with the second oil sub-passage 22, and the other end extends to the rotating shaft rear bearing. Thus, oil in the main oil passage 2 is delivered to the rotating shaft rear bearing to form a rotating shaft rear bearing lubricating oil passage 222, so as to lubricate the rotating shaft rear bearing.

In an example, the first oil sub-passage 21 also extends to the input shaft front bearing, so that oil in the main oil passage 2 is delivered to the input shaft front bearing to form an input shaft front bearing lubricating oil passage 81, so as to lubricate the input shaft front bearing.

In an example, the cooling and lubricating oil circuit further includes an intermediate bearing oil passage 83. Two ends of the intermediate bearing oil passage 83 respectively extend to the input shaft front bearing and the output shaft front bearing. Thus, oil in the input shaft front bearing lubricating oil passage 81 is delivered to the output shaft front bearing to form an output shaft front bearing lubricating oil passage 82, so as to lubricate the input shaft front bearing.

In an example, the cooling and lubricating oil circuit further includes a third oil sub-passage 23. The third oil sub-passage 23 is in fluid communication with the main oil passage 2 and extends to the input shaft rear bearing. Thus, oil in the main oil passage 2 is delivered to the input shaft rear bearing to form an input shaft rear bearing lubricating oil passage 84, so as to lubricate the input shaft rear bearing.

The present embodiments further provide a vehicle including the electric drive assembly according to any one of the first aspect.

The vehicle according to the present embodiments adopts the electric drive assembly of the present disclosure, and has the beneficial technical effects of all the embodiments of the present disclosure.

Described above are merely preferred embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. An electric drive assembly, comprising a motor assembly, a reducer shaft-gear assembly, and a cooling and lubricating oil circuit; wherein
the motor assembly is drivingly connected to the reducer shaft-gear assembly, and each of the motor assembly and the reducer shaft-gear assembly is provided with a matching bearing set; and
the cooling and lubricating oil circuit comprises an oil pumping assembly (1), a main oil passage (2), a branch oil passage, an oil spray pipe (3), and a plurality of bearing lubricating oil passages; wherein the oil pumping assembly (1) is configured to pump oil to the main oil passage (2), both the branch oil passage and the oil spray pipe (3) are in fluid communication with the main oil passage (2), and the plurality of bearing lubricating oil passages correspond one-to-one to bearings in the matching bearing set;
wherein the branch oil passage is configured to deliver oil to the motor assembly, the oil spray pipe (3) is provided with a plurality of first oil spray nozzles (31) in correspondence with the bearings in the matching bearing set, such that oil is sprayed from the first oil spray nozzles (31) onto corresponding bearings to form corresponding bearing lubricating oil passages.

2. The electric drive assembly according to claim 1, further comprising an oil cooler (5), wherein the oil cooler (5) has an oil inlet (51) and an oil outlet, the oil inlet (51) is in fluid communication with the main oil passage (2), and the oil outlet is in fluid communication with the branch oil passage, such that oil in the main oil passage (2) passes through the oil cooler (5) and is cooled before entering the branch oil passage.

3. The electric drive assembly according to claim 1, wherein the motor assembly comprises a rotating shaft (41), a rotor (42), a stator (43), and a stator winding (44), wherein the rotating shaft (41) is drivingly connected to an input shaft (9) of the reducer shaft-gear assembly, the rotor (42) is fitted over an outer circumference of the rotating shaft (41), the stator (43) is arranged around an axis of the rotor (42) on an outer side of the rotor (42), and the stator winding (44) is wound on an inner side of the stator (43); and
the branch oil passage comprises a first oil sub-passage (21) and a second oil sub-passage (22), wherein the first oil sub-passage (21) is in fluid communication with the main oil passage (2) and is configured to deliver oil to the rotating shaft (41), the rotor (42), and the stator winding (44), and the second oil sub-passage (22) is in fluid communication with the main oil passage (2) and is configured to deliver oil to the stator (43).

4. The electric drive assembly according to claim 3, further comprising an oil cooler (5), wherein the oil cooler (5) has an oil inlet (51) and an oil outlet, and the oil outlet comprises a first oil outlet (52) and a second oil outlet (53); wherein
the first oil outlet (52) is in fluid communication with the first oil sub-passage (21), such that oil cooled by the oil cooler (5) flows from the first oil outlet (52) into the first oil sub-passage (21); and
the second oil outlet (53) is in fluid communication with the second oil sub-passage (22), such that oil cooled by the oil cooler (5) flows from the second oil outlet (53) into the second oil sub-passage (22).

5. The electric drive assembly according to claim 2 or claim 4, wherein the oil spray pipe (3) is in fluid communication with a portion of the main oil passage (2) located between the oil pumping assembly (1) and the oil cooler (5).

6. The electric drive assembly according to claim 3, wherein the rotating shaft (41) has a hollow oil cavity (411) extending along an axial direction of the rotating shaft (41);
the rotor (42) has a plurality of rotor oil passages (421) extending along an axial direction of the rotor (42), the plurality of rotor oil passages (421) being distributed at intervals around the axis of the rotor (42); and
the plurality of rotor oil passages (421) are in fluid communication with the hollow oil cavity (411), and the first oil sub-passage (21) is in fluid communication with the hollow oil cavity (411).

7. The electric drive assembly according to claim 6, further comprising two rotor end plates (6), wherein the two rotor end plates (6) are fitted over the outer circumference of the rotating shaft (41) and disposed at two axial ends of the rotor (42) respectively;
each of the two rotor end plate (6) is provided with a plurality of end plate oil inlet holes (61) and a plurality of end plate oil outlet holes (62), wherein the plurality of end plate oil outlet holes (62) axially penetrate through a corresponding rotor end plate (6), and the plurality of end plate oil inlet holes (61) and the plurality of end plate oil outlet holes (62) are each distributed at intervals around the axis of the rotor (42); and
each of the plurality of end plate oil inlet holes (61) is in fluid communication with the hollow oil cavity (411); and each of the plurality of rotor oil passages (421) has one end communicating with an end plate oil inlet hole (61) of one of the two rotor end plates (6), and another end communicating with an end plate oil outlet hole (62) of another of the two rotor end plates (6).

8. The electric drive assembly according to claim 3, wherein the cooling and lubricating oil circuit further comprises two annular oil passages (7) disposed at two axial ends of the stator (43) respectively, and one of the two annular oil passages (7) is in fluid communication with the second oil sub-passage (22); and
the stator (43) has a plurality of stator oil passages (431) extending along an axial direction of the stator (43), the stator oil passages (431) are distributed at intervals around an axis of the stator (43), and two ends of the stator (43) are in fluid communication with the two annular oil passages (7) respectively.

9. The electric drive assembly according to claim 8, wherein each of the two annular oil passages (7) is provided with a plurality of second oil spray nozzles (71) distributed at intervals along a corresponding annular oil passage (7), and the plurality of second oil spray nozzles (71) face the stator winding (44), such that oil is sprayed from the second oil spray nozzles (71) onto the stator winding (44).

10. A vehicle, comprising the electric drive assembly as defined in any one of claims 1 to 9.
